# EUROPEAN PATENT APPLICATION

(11) **EP 4 822 069 A1**
(43) Date of publication of application: **14.10.2026**
(21) Application number: 24899212.5
(22) Date of filing: 27.06.2024
(51) Int. Cl.: D01D 1/02, D01F 6/04, B32B 27/02, B32B 27/32, B32B 27/30, B32B 27/12

(54) **PREPARATION METHOD FOR MICRO-NANO NON-WOVEN FABRIC, AND NON-WOVEN FABRIC OBTAINED USING SAME**

(30) Priority: 06.12.2023 CN 202311662387
(71) Applicant: Ningbo Advanced Materials Co., Ltd., Ningbo, Zhejiang 315504 (CN)
(72) Inventor: LIN, Demiao, Ningbo, Zhejiang 315504 (CN); XU, Shanshan, Ningbo, Zhejiang 315504 (CN)
(74) Representative: Winter, Brandl - Partnerschaft mbB
(86) International application number: PCT/CN2024/101775
(87) International publication number: WO 2025/118561

(57) **Abstract**

A method for preparing a micro-nano non-woven fabric comprises steps of: a) mixing a polymer with a solvent to form a spinning mixture with a first concentration; b) mixing the spinning mixture at a first pressure and a first temperature to form a homogeneous spinning solution; c) depressurizing the homogeneous spinning solution to a second pressure through a depressurization chamber to form a metastable spinning mixture, the second pressure being less than a third pressure and greater than a fourth pressure; and d) spraying the metastable spinning mixture through a plurality of spinneret orifices to form plexifilimentary strands; wherein the third pressure is a cloud point pressure of the spinning mixture at a first concentration and the first temperature, the fourth pressure is a critical pressure when the homogeneous spinning solution is depressurized to form a polymer phase and a solvent phase at the first concentration and the first temperature.

## Description

### Technical Field of the Invention

The present invention relates to the field of preparing non-woven fabric, and in particular to a preparation method for a micro-nano non-woven fabric and a non-woven fabric prepared thereby.

### Background of the Invention

Due to different preparation technologies, micro-nano non-woven fabrics have different microstructures and thus show different properties. At present, the advanced methods for preparing micro-nano non-woven fabrics comprise melt-blow spinning, electrostatic spinning and flash spinning.

Melt-blow spinning generally means that polymers with high melt index such as polypropylene, polyester or polyamide are sprayed in a molten state, stretched by a high-speed air flow and spread on the mesh fabric to manufacture the non-woven fabrics in the micro-nano level. Due to the limitation of processes and raw materials, the diameter of the fiber prepared by melt-blow spinning is generally in the micron level. However, since the fiber has low molecular weight and crystallinity, the non-woven fabric is low in strength, so that the application of the melt-blow spinning is greatly limited. In many cases, it is necessary to strengthen the non-woven fabric and manufacture it into SMS and other composite structures to satisfy the application standards. Electrostatic spinning means that the spinning fluid is drawn and stretched in a high-voltage electrostatic field to manufacture the non-woven fabric made of fiber with a nanometer-level diameter. However, due to the low yield, high product cost and low product strength, the application of the electrostatic spinning is also limited.

Due to its small fiber diameter, large specific surface area, high material crystallinity, three-dimensional continuous structure(plexifilimentary strands) and other structural advantages, the functional non-woven fabric material prepared by the flash spinning technology has the advantages of good water resistance, air permeability, weather resistance, tear resistance, high reflectivity, blockage to particles and bacteria and the like. Tyvek from the DuPont Company of the United States is a commercial product successfully produced by the flash spinning. The used technology of the flash spinning is as follows: high density polyethylene (HDPE) is dissolved in a monofluoro-trichloromethane solvent with a low boiling point at high temperature and high pressure to form a homogeneous spinning solution; the solution passes through a depressurization chamber before spinning, then experiences phase separation by depressurization and enters a two-phase region; the separated two-phase solution is flash spinned through a spinneret nozzle at room temperature and room pressure at a speed close to the sound velocity; and, the monofluoro-trichloromethane is rapidly gasified to absorb heat, and the HDPE is precipitated to form micro-nano fiber filaments. The plexifilimentary starnds are spread on the blanket and then hot-pressed to form a dense non-woven material with high strength. A Chinese Patent CN1685091A (patent No.: CN03822743.6) applied by this company disclosed that the homogeneous spinning solution is depressurized to below the cloud point pressure for spinning.

However, up to now, all disclosed patents have not clearly described that the two-phase region to be experienced in the key process of flash spinning is specifically formed by what type of phase separation mechanism. With the maturity of mechanism study on phase separation of polymer solution and the deep study and prediction of phase transition behavior of polymer solution, it is possible to further optimize the flash spinning technology. Based on such an idea, the present invention optimizes and improves the existing flash spinning technology.

### Summary of the Invention

It is a first object of the present invention to provide a method for preparing a micro-nano non-woven fabric with optimized spinning pressure.

It is a second object of the present invention to provide a non-woven fabric prepared by the above method.

For achieving the first object, the method for preparing a micro-nano non-woven fabric, comprises the following steps:
(1) mixing a polymer with a solvent to form a spinning mixture with a first concentration;
(2) mixing the spinning mixture at a first pressure and a first temperature to form a homogeneous spinning solution;
(3) depressurizing the homogeneous spinning solution to a second pressure through a depressurization chamber to form a metastable spinning mixture, the second pressure being less than a third pressure and greater than a fourth pressure; and
(4) flash spinning the metastable spinning mixture through a plurality of spinneret orifices to form plexifilimaentary stamds;

wherein the third pressure is a cloud point pressure of the spinning mixture at a first concentration and the first temperature,
the fourth pressure is a critical spinodal decomposition pressure when the homogeneous spinning solution is depressurized to form a polymer phase and a solvent phase at the first concentration and the first temperature.

Preferably, the first pressure ranges from the cloud point pressure to a pressure 3 MPa higher than the cloud point pressure.

Preferably, in the metastable spinning mixture, the dispersed droplet phase formed by the solvent is distributed in the supersaturated polymer solution. A dispersed droplet phase composed of a large amount of fine-sized pure solvent exists in the metastable spinning mixture, and this dispersed droplet phase is distributed in the supersaturated polymer solution. Since the polymer in the metastable spinning mixture is dispersed more uniformly, during the spinning of the metastable spinning mixture, the diameter of the fiber is smaller and more uniform.

Preferably, the polymer comprises one or more of polyethylene, polypropylene, polytetrafluoroethylene and polyvinylidene fluoride. The polymer further comprises other polymers suitable for the traditional flash spinning. For the homogeneous spinning solution formed by two or more polymers, the cloud point pressure and the fourth pressure are correspondingly determined as long as the components of the polymers in the homogeneous spinning solution are determined.

Preferably, the solvent comprises one or more of chloromethane, dichloromethane, chloroform, tetrachloromethane, monofluoro-trichloromethane, chloroethane, dichlorotrifluoroethane and cis-1,2-dichloroethene.

Preferably, the solvent comprises one or more of C3-C8 hydrocarbon compounds. For the homogeneous spinning solution formed by two or more solvents, the cloud point pressure and the fourth pressure are correspondingly determined as long as the components of the solvents in the homogeneous spinning solution are determined.

Preferably, in the step (b), the spinning mixture is stirred and mixed for 15 to 60 minutes in a spinning kettle to form the homogeneous spinning solution.

Preferably, in the step (c), the metastable spinning mixture is maintained for 2 to 100 seconds at the second pressure. The metastable spinning mixture can be stably maintained, which is beneficial to the actual operation in the process production.

Preferably, in the step (d), a spinning speed of the spinneret orifices is 300 m/s to 400 m/s, and a crystallinity of the plexifilimentary strands is greater than 80%.

Preferably, the method further comprises a step: e) spreading the plexifilimentary strands on a blanket, and hot-pressing the plexifilimentary strands on the blanket to form a non-woven fabric.

For achieving the second object, the non-woven fabric obtained is prepared by the above method.

Compared with the prior art, the method for preparing a micro-nano non-woven fabric of the present invention has the following advantages. When the selected polymer and solvent are at a certain concentration and temperature, when the pressure is reduced, the mixed state of the polymer and the solvent changes from the homogeneous spinning solution to the metastable spinning mixture and then to the mixture with the separated polymer phase and solvent phase. In the present invention, the spinning pressure for spinning is selected in the pressure interval where the metastable spinning mixture is located. Specifically, the homogeneous spinning solution is depressurized to a certain pressure value between the fourth spinodal decomposition pressure and the cloud point pressure for spinning. Since the state of the metastable spinning mixture is that the dispersed droplet phase composed of a large amount of fine-sized pure solvent is distributed in the supersaturated polymer solution, the polymer in the metastable spinning mixture can be distributed uniformly and can exist stably. The metastable spinning mixture enters the room-temperature and room-pressure spinning chamber from the spinneret nozzle for flash spinning, so that plexifilimentary strands with a three-dimensional micro-nano-structure are formed. In the flash spinning process, the oriented crystallization of fiber is facilitated by the shearing and stretching orientation, and plexifilimentary strands with crystallinity above 80% can be prepared. Moreover, the diameter of the plexifilimentary strands is smaller and more uniform, and the strength of the plexifilimentary strands is higher. Similarly, the non-woven fabric prepared by this method has good water resistance, air permeability and tear resistance.

### Brief Description of the Drawings

Fig. 1 is an upper critical solution pressure (UCSP) phase graph according to all embodiments of the present invention;
Fig. 2 is a schematic diagram showing the homogeneous spinning solution is spinning after passing through a depressurization chamber with P₂ pressure according to all embodiments of the present invention;
Fig. 3 is a schematic diagram showing the homogeneous spinning solution is spinning after passing through a depressurization chamber with P₃ pressure according to all embodiments of the present invention.

### Detailed Description of the Invention

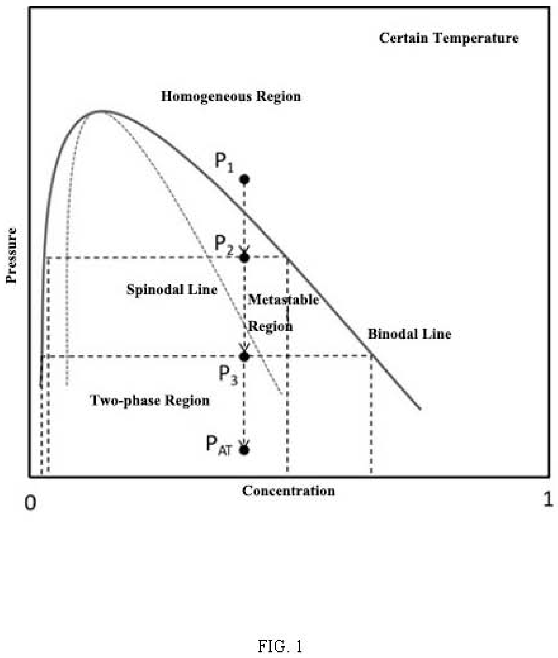

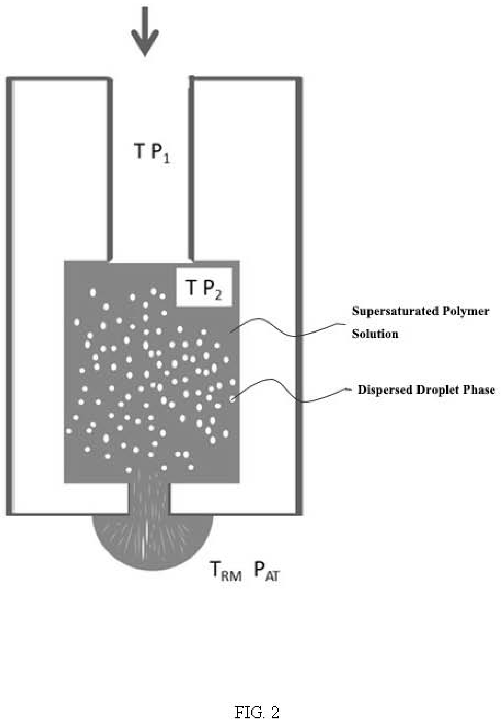

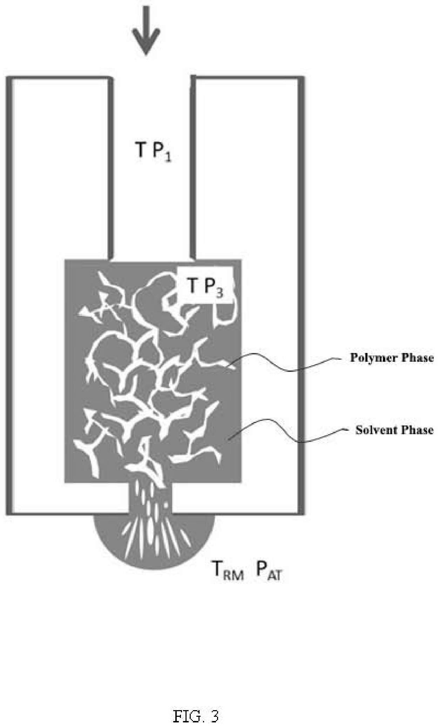

The present invention will be further described below in detail by embodiments with reference to the accompanying drawings.
The method of the present invention discloses that the polymer homogeneous spinning solution with an upper critical solution pressure (UCSP) phase graph is depressurized to a metastable region (an intermediate region between the spinodal line and the binodal line) in the phase graph and controlled by a nucleation-growth phase separation mechanism to form a phase separation state with a fine microstructure, i.e., a metastable spinning mixture as described in the present invention, as shown in Fig. 1. The microstructure is specifically as follows: a dispersed droplet phase composed of a large amount of fine-sized pure solvent is distributed in the polymer solution composed of the supersaturated solution, and the microstructure is evolved through crystallization and can be maintained for a long time since the system is in the metastable region. The mixture in the metastable region is sprayed for flash spinning through the spinneret nozzles to form plexifilimentary strands and non-woven fabrics of a three-dimensional continuous micro-nano-structure with smaller and more uniform diameter and higher strength. Specifically, as shown in Fig. 2, in the present invention, a homogeneous spinning solution is prepared at an appropriate temperature T, concentration and pressure P₁, and the homogeneous spinning solution then passes through the depressurization chamber, so that the homogeneous spinning solution is depressurized to a metastable region (T, P₂) to form a metastable spinning mixture, and the metastable spinning mixture is maintained for 2s to 100s. The polymer is sprayed to the room temperature and room pressure (T_{RM}, P_{AT}) through spinning orifices. The low-boiling-point solvent is quickly evaporated, and the polymer is sheared and stretched at a high speed when being precipitated and solidified from the solution, so as to form three-dimensional continuous plexifilimentary strands with small diameter and high crystallinity. By using the technical means similar to non-woven fabric or papermaking, the plexifilimentary strands are spread on a blanket and then hot-pressed at a certain temperature and pressure, and the fibers are bonded to form a particular dense structure with certain strength. Comparatively speaking, the conventional flash spinning technology is to depressurize the homogeneous spinning solution to the two-phase region (T, P₃), so that the homogeneous spinning solution undergoes phase separation controlled by the spinodal decomposition mechanism, and the microstructure is a bi-continuous structure. Due to the rapid phase separation at P₃, it is difficult to control the microstructure, and the distribution of the polymer in the microstructure is not uniform. As a result, the flash spinning fibers are not uniform in thickness, and the difficulty in the control technology is high, as shown in Fig. 3.

### Embodiment 1

The method for preparing a micro-nano non-woven fabric of the present invention comprises steps of: (a) High density polyethylene (Formosa Plastics in Taiwan, LH606, Mw=89,000 g/mol, molecular weight distribution 2.33) and dichloromethane were mixed to form a spinning mixture with a concentration of 13 wt%.
(b) The spinning mixture is placed in a 4L spinning kettle and then mechanically stirred and mixed for 30 minutes at a pressure of 11 MPa and at a temperature of 205°C to form a homogeneous spinning solution. The pressure interval of the metastable region at this concentration and temperature is from 10.5 to 7.5 MPa.
(c) The homogeneous spinning solution entered a depressurization chamber through depressurization orifices and is then depressurized to a pressure of 10.1 MPa to form a metastable spinning mixture, and the metastable spinning mixture is maintained for 10 s in the depressurization chamber.
(d) The metastable spinning mixture is sprayed through spinneret orifices at a speed of 350 m/s to obtain plexifilimentary strands. The performance of the obtained plexifilimentary strands is shown in Table 1.
(e) The plexifilimentary strands were spread on a blanket, and the plexifilimentary strands on the blanket were hot-pressed to form a non-woven fabric.

### Embodiment 2

The method for preparing a micro-nano non-woven fabric of the present invention comprises steps of: (a) High density polyethylene and dichloromethane were mixed to form a spinning mixture with a concentration of 13 wt%.
(b) The spinning mixture is placed in a 4L spinning kettle and then mechanically stirred and mixed for 15 minutes at a pressure of 13.5 MPa and at a temperature of 205°C to form a homogeneous spinning solution. The pressure interval of the metastable region at this concentration and temperature is from 10.5 MPa to 7.5 MPa.
(c) The homogeneous spinning solution entered a depressurization chamber through depressurization orifices and is then depressurized to a pressure of 10.4 MPa to form a metastable spinning mixture, and the metastable spinning mixture is maintained for 2 seconds in the depressurization chamber.
(d) The metastable spinning mixture is sprayed through spinneret orifices at a speed of 300 m/s to obtain plexifilimentary strands. The performance of the obtained plexifilimentary strands is shown in Table 1.
(e) The plexifilimentary strands were spread on a blanket, and the plexifilimentary strands on the blanket were hot-pressed to form a non-woven fabric.

### Embodiment 3

The method for preparing a micro-nano non-woven fabric of the present invention comprises steps of: (a) High density polyethylene and dichloromethane were mixed to form a spinning mixture with a concentration of 13 wt%.
(b) The spinning mixture is placed in a 4L spinning kettle and then mechanically stirred and mixed for 60 minutes at a pressure of 10.6 MPa and at a temperature of 205°C to form a homogeneous spinning solution. The pressure interval of the metastable region at this concentration and temperature is from 10.5MPa to 7.5 MPa.
(c) The homogeneous spinning solution entered a depressurization chamber through depressurization orifices and is then depressurized to a pressure of 7.6 MPa to form a metastable spinning mixture, and the metastable spinning mixture is maintained for 100 s in the depressurization chamber.
(d) The metastable spinning mixture is sprayed through spinneret orifices at a speed of 400 m/s to obtain plexifilimentary strands. The performance of the obtained plexifilimentary strands is shown in Table 1.
(e) The plexifilimentary strands were spread on a blanket, and the plexifilimentary strands on the blanket were hot-pressed to form a non-woven fabric.

### Embodiment 4

The method for preparing a micro-nano non-woven fabric of the present invention comprises steps of: (a) High density polyethylene and pentane were mixed to form a spinning mixture with a concentration of 15 wt%.
(b) The spinning mixture is placed in a 4L spinning kettle and then mechanically stirred and mixed for 30 minutes at 12 MPa and 215°C to form a homogeneous spinning solution. The pressure interval of the metastable region at this concentration and temperature is from 11.5 MPa to 7.0 MPa.
(c) The homogeneous spinning solution entered a depressurization chamber through depressurization orifices and is then depressurized to 9.8 MPa to form a metastable spinning mixture, and the metastable spinning mixture is maintained for 10 seconds in the depressurization chamber.
(d) The metastable spinning mixture is sprayed through spinneret orifices at a speed of 350 m/s to obtain plexifilimentary strands. The performance of the obtained plexifilimentary strands is shown in Table 1.
(e) The plexifilimentary strands were spread on a blanket, and the plexifilimentary strands on the blanket were hot-pressed to form a non-woven fabric.

### Comparative Example 1

A method for preparing a micro-nano non-woven fabric comprises steps of: (1) High density polyethylene and dichloromethane were mixed to form a spinning mixture with a concentration of 13 wt%.
(2) The spinning mixture is placed in a 4L spinning kettle and then mechanically stirred and mixed for 30 minutes at 11 MPa and at a temperature of 205°C to form a homogeneous spinning solution. The pressure interval of the metastable region at this concentration and temperature is from 10.5 Mpa to 7.5 MPa.
(3) The homogeneous spinning solution entered a depressurization chamber through depressurization orifices and is then depressurized to 5.1 MPa to form a metastable spinning mixture, and the metastable spinning mixture is maintained for 10 seconds in the depressurization chamber.
(4) The metastable spinning mixture is sprayed through spinneret orifices at a speed of 350 m/s to obtain plexifilimentary strands. The performance of the obtained plexifilimentary strands is shown in Table 1.
(5) The plexifilimentary strands were spread on a blanket, and the plexifilimentary strands on the blanket were hot-pressed to form a non-woven fabric.

The Comparative Example 1 differs from Embodiment 1 in that the pressure in the depressurization chamber is different.

### Comparative Example 2

A method for preparing a micro-nano non-woven fabric comprises steps of: (1) High density polyethylene and dichloromethane were mixed to form a spinning mixture with a concentration of 15 wt%.
(2) The spinning mixture is placed in a 4L spinning kettle and then mechanically stirred and mixed for 30 minutes at 11 MPa and at a temperature of 205°C to form a homogeneous spinning solution. The pressure interval of the metastable region at this concentration and temperature is from 10.4 MPa to 6.3 MPa.
(3) The homogeneous spinning solution entered a depressurization chamber through depressurization orifices and is then depressurized to 5.1 MPa to form a metastable spinning mixture, and the metastable spinning mixture is maintained for 10 seconds in the depressurization chamber.
(4) The metastable spinning mixture is sprayed through spinneret orifices at a speed of 350 m/s to obtain plexifilimentary strands. The performance of the obtained plexifilimentary strands is shown in Table 1.
(5) The plexifilimentary strands were spread on a blanket, and the plexifilimentary strands on the blanket were hot-pressed to form a non-woven fabric.

The Comparative Example 2 differs from Comparative Embodiment 1 in that the concentration of the spinning mixture is different.

**Table 1 Performance parameters of plexifilimentary strands obtained from different homogeneous spinning solutions at different pressures**

| Embodiment | Interval of the metastable region (MPa) | Spinning pressure (MPa) | Fiber diameter (µm) | | | | Crystallinity | Fiber strength (g.p.d) |
|---|---|---|---|---|---|---|---|---|
| | | | Minimum value | Maximum value | Average value | Variance | | |
| Embodiment 1 | 10.5~7.5 | 10.1 | 0.23 | 4.52 | 3.3 | 2.3 | 83.2% | 3.8 |
| Embodiment 2 | 10.5~7.5 | 10.4 | 0.22 | 4.66 | 3.2 | 2.4 | 83.4% | 3.9 |
| Embodiment 3 | 10.5~7.5 | 7.6 | 0.32 | 4.78 | 3.5 | 2.8 | 82.3% | 3.7 |
| Embodiment 4 | 11.5~7.0 | 9.8 | 0.34 | 4.75 | 3.6 | 2.5 | 81.2% | 3.6 |
| Comparative Embodiment 1 | 10.5~7.5 | 5.1 | 0.99 | 38.48 | 6.9 | 6.8 | 75.1% | 2.7 |
| Comparative Embodiment 2 | 10.4~6.3 | 5.1 | 0.56 | 32.23 | 5.2 | 5.6 | 78.2% | 3.2 |

It can be known from the test results that the crystallinity of the plexifilimentary strands prepared by the method of the present invention exceeded 80%, and the fibers were small in diameter, uniform in thickness and high in strength. The Comparative Example 1 and Comparative Example 2 proved that the plexifilimentary strands prepared by spinning at a pressure beyond the interval of the metastable region were large in diameter and low in strength. Thus, the appropriate spinning pressure is determined according to the interval of the metastable region on the upper critical solution pressure (UCSP) of the polymer solution, so it is very important to produce plexifilimentary strands with excellent performance.

## Claims

1. A method for preparing a micro-nano non-woven fabric, comprising steps of:
a) mixing a polymer with a solvent to form a spinning mixture with a first concentration;
b) mixing the spinning mixture at a first pressure and a first temperature to form a homogeneous spinning solution;
c) depressurizing the homogeneous spinning solution to a second pressure through a depressurization chamber to form a metastable spinning mixture, the second pressure being less than a third pressure and greater than a fourth pressure; and
d) spraying the metastable spinning mixture through a plurality of spinneret orifices to form plexifilimentary strands;
wherein the third pressure is a cloud point pressure of the spinning mixture at a first concentration and the first temperature,
the fourth pressure is a critical spinodal decomposition pressure when the homogeneous spinning solution is depressurized to form a polymer phase and a solvent phase at the first concentration and the first temperature.

2. The method of claim 1, wherein the first pressure preferably ranges from the cloud point pressure to a pressure 3 MPa higher than the cloud point pressure.

3. The method of claim 2, wherein the polymer comprises one or more of polyethylene, polypropylene, polytetrafluoroethylene and polyvinylidene fluoride.

4. The method of claim 3, wherein the solvent comprises one or more of chloromethane, dichloromethane, chloroform, tetrachloromethane, monofluoro-trichloromethane, chloroethane, dichlorotrifluoroethane and cis-1, 2-dichloroethene.

5. The method of claim 4, wherein the solvent comprises one or more of C3-C8 hydrocarbon compounds.

6. The method of claim 1, wherein in step (b), the spinning mixture is stirred and mixed for 15 to 60 minutes in a spinning kettle to form the homogeneous spinning solution.

7. The method of claim 1, wherein in step (c), the metastable spinning mixture is maintained for 2 to 100 s at the second pressure.

8. The method of claim 1, wherein in step (d), a spinning speed of the spinneret orifices is 300 m/s to 400 m/s, and a crystallinity of the plexifilimentary strands is greater than 80%.

9. The method of any one of claims 1-8, wherein the method further comprises:
e) spreading the plexifilimentary strands on a blanket, and hot-pressing the plexifilimentary strands on the blanket to form a non-woven fabric.

10. A non-woven fabric is prepared by the method of claim 9.
